# EUROPEAN PATENT APPLICATION

(11) **EP 4 418 751 A1**
(43) Date of publication of application: **21.08.2024**
(21) Application number: 23165442.7
(22) Date of filing: 30.03.2023
(51) Int. Cl.: H04W 52/02

(54) **METHOD FOR PERFORMING ADAPTIVE PACKET FILTERING CONTROL IN WIRELESS COMMUNICATIONS SYSTEM, AND ASSOCIATED APPARATUS**

(30) Priority: 14.02.2023 US 202318109267
(71) Applicant: MediaTek Inc., Hsin-Chu 300 (TW)
(72) Inventor: LAI, Sheng-Hung, 30078 Hsinchu City (TW)
(74) Representative: Hoefer & Partner Patentanwälte mbB

(57) **Abstract**

A method for performing adaptive packet filtering control in a wireless communications system and associated apparatus are provided. The method applicable to a first device includes: utilizing a processing circuit within the first device to monitor abnormal wake-up events among a plurality of wake-up events and identify a common pattern of a plurality of unwanted packets which cause occurrence of the abnormal wake-up events (S21); utilizing the processing circuit to notify a communications control circuit of the common pattern identified by the processing circuit (S22), wherein the communications control circuit is positioned within the first device; and in response to the common pattern identified by the processing circuit being sent to the communications control circuit, utilizing the communications control circuit to perform adaptive configuration and packet filtering according to the common pattern identified by the processing circuit (S23), for preventing occurrence of an additional abnormal wake-up event due to an additional unwanted packet.

## Description

### Background

The present invention is related to communications control, and more particularly, to a method for performing adaptive packet filtering control in a wireless communications system, and associated apparatus such as a station (STA) device.

According to the related art, an access point (AP) device and a STA device in a wireless communications system may be configured to communicate with each other to provide a network service to a user. For example, the STA device may enter a sleeping mode to save power. When there is a need, the STA device may wake up to continue providing the network service to the user. Some problems may occur, however. More particularly, some abnormal packets (e.g., unwanted packets that are wirelessly transmitted from a certain source) may appear regularly in the air, and the STA device may be woken up by the abnormal packets but can do nothing related to these packets, causing unnecessary power consumption of the STA device. It seems that no proper suggestion has been proposed in the related art. Thus, a novel method and associated architecture are needed for solving the problem of the related art without introducing any side effect or in a way that is less likely to introduce a side effect.

### Summary

It is an objective of the present invention to provide a method for performing adaptive packet filtering control in a wireless communications system, and associated apparatus such as a STA device, in order to solve the above-mentioned problem.

It is another objective of the present invention to provide a method for performing adaptive packet filtering control in a wireless communications system, and associated apparatus such as a STA device, in order to prevent unnecessary power consumption in the apparatus. A method and a device according to the invention are defined in the independent claims. The dependent claims define preferred embodiments thereof.

At least one embodiment of the present invention provides a method for performing adaptive packet filtering control in a wireless communications system, where the wireless communications system comprises a first device, and the method is applicable to the first device. For example, the method may comprise: utilizing a processing circuit within the first device to monitor abnormal wake-up events among a plurality of wake-up events and identify a common pattern of a plurality of unwanted packets which cause occurrence of the abnormal wake-up events; utilizing the processing circuit to notify a communications control circuit of the common pattern identified by the processing circuit, wherein the communications control circuit is positioned within the first device; and in response to the common pattern identified by the processing circuit being sent to the communications control circuit, utilizing the communications control circuit to perform adaptive configuration and packet filtering according to the common pattern identified by the processing circuit, for preventing occurrence of an additional abnormal wake-up event due to an additional unwanted packet.

At least one embodiment of the present invention provides a first device for performing adaptive packet filtering control in a wireless communications system, where the wireless communications system comprises the first device and a second device. The first device may comprise a processing circuit that is arranged to control operations of the first device. The first device may further comprise a communications control circuit that is coupled to the processing circuit and arranged to perform communications control, wherein the communications control circuit is arranged to perform wireless communications operations with the second device for the first device. For example, the first device may be arranged to utilize the processing circuit to monitor abnormal wake-up events among a plurality of wake-up events and identify a common pattern of a plurality of unwanted packets which cause occurrence of the abnormal wake-up events; the first device may be arranged to utilize the processing circuit to notify the communications control circuit of the common pattern identified by the processing circuit; and in response to the common pattern identified by the processing circuit being sent to the communications control circuit, the first device may be arranged to utilize the communications control circuit to perform adaptive configuration and packet filtering according to the common pattern identified by the processing circuit, for preventing occurrence of an additional abnormal wake-up event due to an additional unwanted packet.

Preferably, the apparatus may comprise at least one portion (e.g., a portion or all) of the wireless communications system. For example, the apparatus may represent a portion of the wireless communications system, such as the first device (e.g., a STA device). In some examples, the apparatus may represent the whole of the wireless communications system.

It is an advantage of the present invention that, through proper design, the present invention method, as well as the associated apparatus such as the first device, can monitor the abnormal wake-up events and identify the common pattern at runtime of the processing circuit, and adaptively configure the communications control circuit to operate according to the common pattern, in order to prevent unnecessary power consumption in the apparatus, such as any power consumption corresponding to any additional abnormal wake-up event due to any additional unwanted packet, and therefore enhance the overall performance. In addition, the present invention method and apparatus can solve the related art problem without introducing any side effect or in a way that is less likely to introduce a side effect.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram of a wireless communications system according to an embodiment of the present invention.
FIG. 2 is a diagram illustrating a multi-layer control scheme according to an embodiment of the present invention.
FIG. 3 is a diagram illustrating a packet-pattern-aware wake-up prevention control scheme of a method for performing adaptive packet filtering control in a wireless communications system according to an embodiment of the present invention.
FIG. 4 is a diagram illustrating some implementation details of the packet-pattern-aware wake-up prevention control scheme shown in FIG. 3.
FIG. 5 is a diagram illustrating an example of a wake-up event and associated signal variations.
FIG. 6 illustrates a working flow of the method according to an embodiment of the present invention.
FIG. 7 is a diagram illustrating a pattern extraction control scheme of the method according to an embodiment of the present invention.
FIG. 8 illustrates some implementation details of the common information in the pattern extraction control scheme shown in FIG. 7 according to an embodiment of the present invention.
FIG. 9 illustrates some implementation details of the common information in the pattern extraction control scheme shown in FIG. 7 according to another embodiment of the present invention.
FIG. 10 illustrates some implementation details of the common information in the pattern extraction control scheme shown in FIG. 7 according to yet another embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

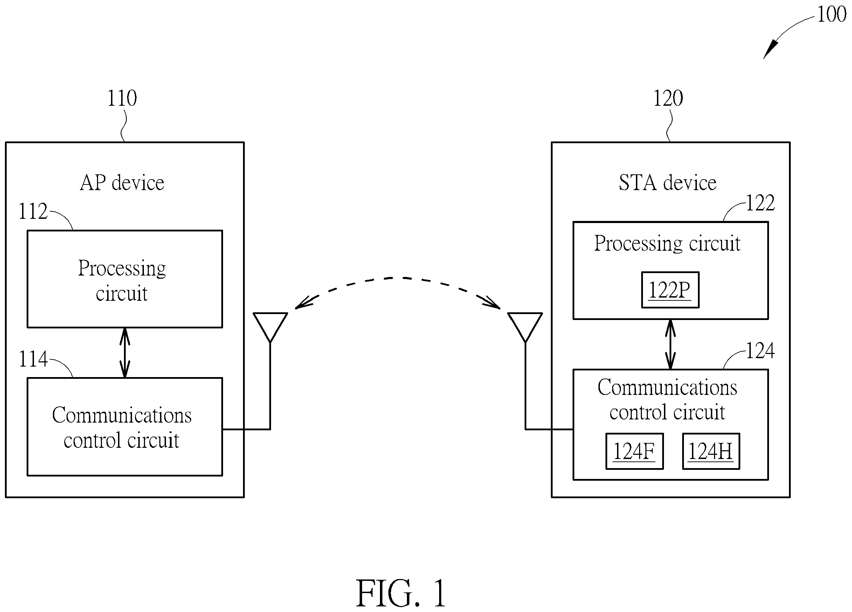

FIG. 1 is a diagram of a wireless communications system 100 according to an embodiment of the present invention. For better comprehension, the wireless communications system 100 (e.g., any device therein) may be compatible or back-compatible to one or more versions of the Institute of Electrical and Electronics Engineers (IEEE) 802.11 standards, but the present invention is not limited thereto. As shown in FIG. 1, the wireless communications system 100 may comprise multiple devices such as the AP device 110 and the STA device 120, where the AP device 110 may comprise a processing circuit 112, at least one communications control circuit (e.g., one or more communications control circuits), which may be collectively referred to as the communications control circuit 114, and at least one antenna (e.g., one or more antennas) of the communications control circuit 114, and the STA device 120 may comprise a processing circuit 122, at least one communications control circuit (e.g., one or more communications control circuits), which may be collectively referred to as the communications control circuit 124, and at least one antenna (e.g., one or more antennas) of the communications control circuit 124. In the architecture shown in FIG. 1, the processing circuit 112 can be arranged to control operations of the AP device 110 to make the AP device 110 act as an AP in the wireless communications system 100, and the communications control circuit 114 can be arranged to perform communications control, and more particularly, perform wireless communications operations with the STA device 120 (e.g., the communications control circuit 124 thereof) for the AP device 110. In addition, the processing circuit 122 can be arranged to control operations of the STA device 120 to make the STA device 120 act as an STA in the wireless communications system 100, and the communications control circuit 124 can be arranged to perform communications control, and more particularly, perform wireless communications operations with the AP device 110 (e.g., the communications control circuit 114 thereof) for the STA device 120.

As shown in FIG. 1, the processing circuit 122 may execute at least one program module (e.g., one or more program modules), which may be collectively referred to as the program module 122P, and the program module 122P running on the processing circuit 122 may be arranged to control the operations of the STA device 120. For example, the program module 122P may comprise an operating system (OS), one or more drivers, application programs, etc. In addition, a firmware module 124F running on the communications control circuit 124 may be arranged to control at least one hardware circuit (e.g., one or more hardware circuits) within the communications control circuit 124, where the aforementioned at least one hardware circuit may be collectively referred to as the hardware circuit 124H, but the present invention is not limited thereto. For example, the firmware module 124F may be implemented by way of a program module running on a microprocessor (not shown in FIG. 1) within the communications control circuit 124. More particularly, the communications control circuit 124 may comprise the microprocessor, a non-volatile memory, such as an electronically erasable programmable read-only memory (EEPROM) or a flash memory, and a bottom layer circuit such as the hardware circuit 124H. The non-volatile memory may be arranged to store a set of program codes corresponding to multiple functions of the communications control circuit 124, and the microprocessor may load the set of program codes from the non-volatile memory to be the firmware module 124F running on the microprocessor, for controlling the bottom layer circuit such as the hardware circuit 124H to provide the multiple functions mentioned above.

Preferably, the processing circuit 112 can be implemented by way of at least one processor/microprocessor, at least one random access memory (RAM), at least one bus, etc., and the communications control circuit 114 can be implemented by way of at least one wireless network control circuit and at least one wired network control circuit, but the present invention is not limited thereto. Examples of the AP device 110 may include, but are not limited to: a Wi-Fi router. In addition, the processing circuit 122 can be implemented by way of at least one processor/microprocessor, at least one RAM, at least one bus, etc., and the communications control circuit 124 can be implemented by way of at least one wireless network control circuit, but the present invention is not limited thereto. Examples of the STA device 120 may include, but are not limited to: a multifunctional mobile phone, a laptop computer, an all-in-one computer and a wearable device.

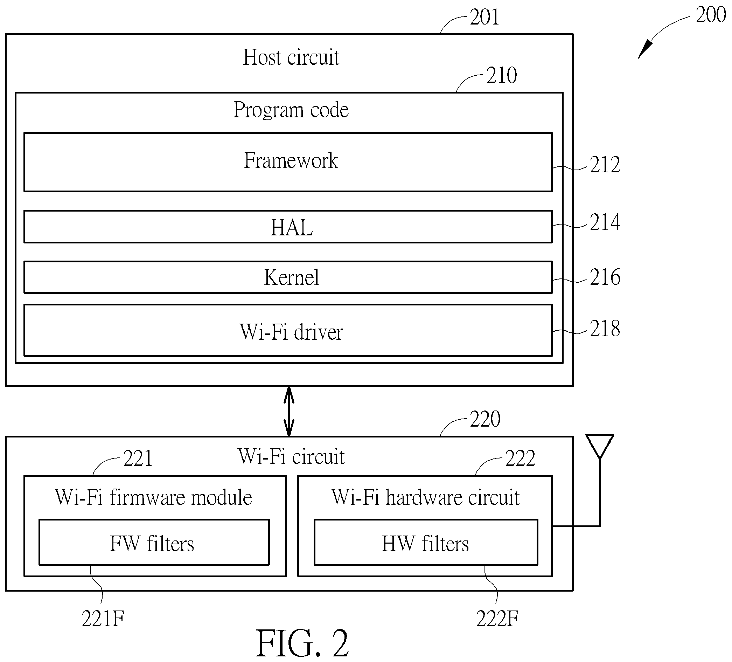

FIG. 2 is a diagram illustrating a multi-layer control scheme according to an embodiment of the present invention. An electronic device 200 operating according to the multi-layer control scheme may comprise a host circuit 201 and a Wi-Fi circuit 220, and the host circuit 201 may execute a set of program codes 210 to be a set of program modules running on the host circuit 201, respectively, but the present invention is not limited thereto. Preferably, the architecture shown in FIG. 2 may vary. For example, the electronic device 200 can be implemented as any electronic device among the multifunctional mobile phone, the laptop computer, the all-in-one computer, the wearable device, etc.

As shown in the upper half of FIG. 2, the set of program codes 210 may comprise the set of program modules such as the framework 212, the hardware abstraction layer (HAL) 214, the kernel 216 and the Wi-Fi driver 218. As shown in the lower half of FIG. 2, the Wi-Fi circuit 220 may comprise a Wi-Fi firmware module 221 and a Wi-Fi hardware circuit 222, where the Wi-Fi firmware module 221 may comprise one or more firmware filters 221F (labeled "FW filters" for brevity), and the Wi-Fi hardware circuit 222 may comprise one or more hardware filters 222F (labeled "HW filters" for brevity). In addition, the Wi-Fi driver 218 running on the host circuit 201 may be regarded as the driver of the Wi-Fi circuit 220, for driving the Wi-Fi circuit 220 (e.g., the sub-circuits thereof). Additionally, the Wi-Fi firmware module 221 running on the Wi-Fi circuit 220 (e.g., the microprocessor therein) may be arranged to control the bottom layer circuit such as the Wi-Fi hardware circuit 222. For better comprehension, the architecture of the electronic device 200 shown in FIG. 2 can be taken as an example of the architecture of the STA device 120 shown in FIG. 1. More particularly, the host circuit 201 and the set of program codes 210 (e.g., the set of program modules such as the framework 212, the HAL 214, the kernel 216 and the Wi-Fi driver 218) running thereon can be taken as examples of the processing circuit 122 and the program module 122P running thereon, respectively, and the Wi-Fi circuit 220 can be taken as an example of the communications control circuit 124, where the Wi-Fi firmware module 221 and the Wi-Fi hardware circuit 222 can be taken as examples of the firmware module 124F and the hardware circuit 124H, respectively.

Preferably, the STA device 120 (e.g., the electronic device 200) may further comprise a battery (not shown in FIGS. 1 and 2), for providing the STA device 120 with electric power. For example, the STA device 120 (e.g., the electronic device 200) may operate according to any control scheme among multiple control schemes. Based on a first power saving control scheme among the multiple control schemes, the STA device 120 may provide a network service to a user of the STA device 120 with the aid of the AP device 110, and then enter a sleeping mode to save power, and may wake up to continue providing the network service to the user when there is a need. Based on a second power saving control scheme among the multiple control schemes, when detecting that the latest level (e.g., a voltage level or a charge level) regarding the electric power of the battery is less than a predetermined level (e.g., a predetermined low level), which may indicate that the STA device 120 will use up the electric power of the battery in a short time period, the processing circuit 122 (e.g., the processor such as a central processing unit (CPU)) may operate with a decreased operational speed, in order to prevent rapidly using up the electric power of the battery, where decreasing the operational speed of the processing circuit 122 (e.g., the processor such as the CPU) may reduce the overall performance. For the STA device 120 that is capable of operating according to the first power saving control scheme, some abnormal packets (e.g., unwanted packets that are wirelessly transmitted from a certain source device) may appear regularly in the air to wake up the STA device 120 multiple times, causing unnecessary power consumption of the STA device 120. Based on at least one other control scheme (e.g., one or more other control scheme) among the multiple control schemes, the STA device 120 (e.g., the firmware module 124F running on the communications control circuit 124) may adaptively configure the bottom layer circuit such as the hardware circuit 124H to perform packet blocking on new incoming packets that are similar to or the same as the abnormal packets (e.g., the unwanted packets), in order to fight against this kind of packets to prevent unnecessary power consumption of the STA device 120 and decrease the probability of operating according to the second power saving control scheme, and therefore enhance the overall performance.

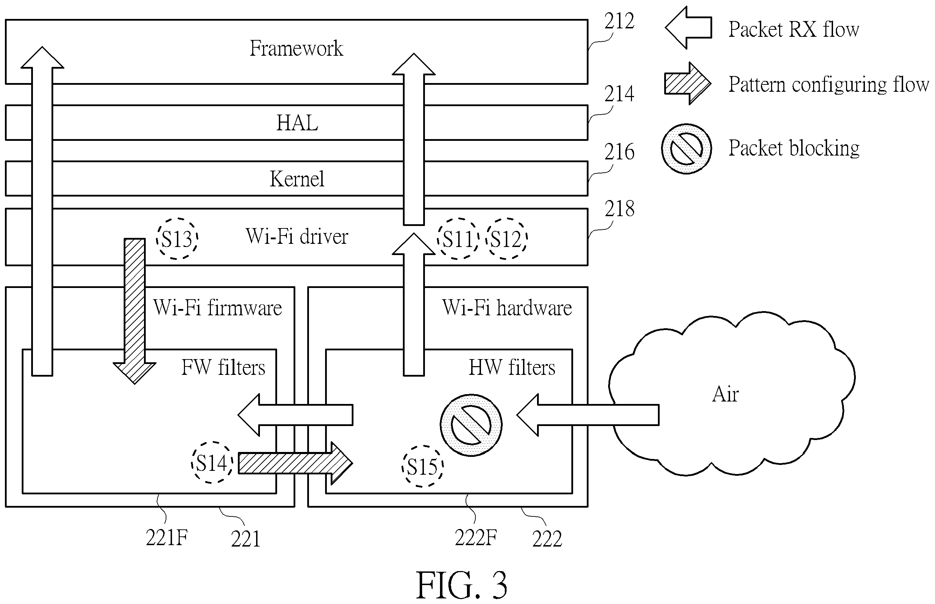

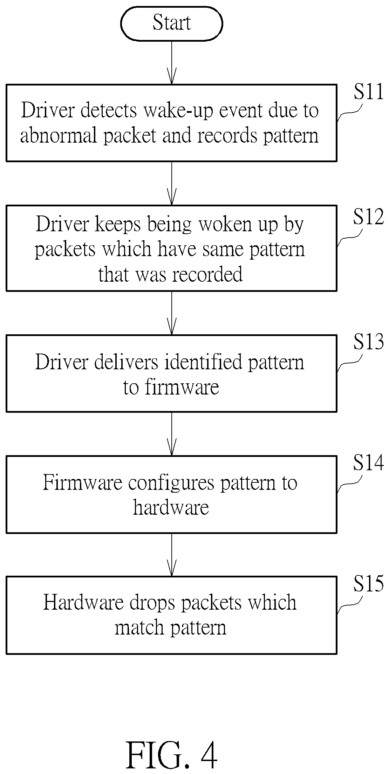

FIG. 3 illustrating a packet-pattern-aware wake-up prevention control scheme of a method for performing adaptive packet filtering control in a wireless communications system such as the wireless communications system 100 according to an embodiment of the present invention, and FIG. 4 is a diagram illustrating some implementation details of the packet-pattern-aware wake-up prevention control scheme shown in FIG. 3. The method is applicable to a first device in the wireless communications system 100, where the first device may represent the STA device 120 shown in FIG. 1, such as the electronic device 200 shown in FIG. 2, but the present invention is not limited thereto.

The packet receiving (RX) flow as illustrated with some arrows shown in FIG. 3 may indicate a plurality of first transmission paths for transmitting incoming packets (e.g., the information thereof) received from the air, and the pattern configuring flow as illustrated with some other arrows shown in FIG. 3 may indicate a plurality of second transmission paths for transmitting the associated information regarding adaptively configuring the bottom layer circuit mentioned above. For example, the Wi-Fi driver 218 may be arranged to execute Steps S11, S12 and S13, the Wi-Fi firmware module 221 (labeled "Wi-Fi firmware" in FIG. 3 for brevity) may be arranged to execute Step S14, and the Wi-Fi hardware circuit 222 (labeled "Wi-Fi hardware" in FIG. 3 for brevity) may be arranged to execute Step S15. As a result, the Wi-Fi hardware circuit 222 (e.g., the hardware filters 222F) can perform the packet blocking mentioned above.

In Step S11, the Wi-Fi driver 218 running on the host circuit 201 (e.g., the processor such as the CPU) may detect at least one wake-up event (e.g., one or more wake-up events) due to at least one abnormal packet (e.g., one or more abnormal packets) and record a pattern of the aforementioned at least one abnormal packet (labeled "Driver detects wake-up event due to abnormal packet and records pattern" in FIG. 4 for brevity).

In Step S12, the Wi-Fi driver 218 running on the host circuit 201 (e.g., the processor such as the CPU) may keep being woken up by one or more new incoming packets which have the same pattern that was recorded (labeled "Driver keeps being woken up by packets which have same pattern that was recorded" in FIG. 4 for brevity). For example, the Wi-Fi driver 218 running on the host circuit 201 may identify the pattern as a common pattern of the aforementioned at least one abnormal packet and the one or more new incoming packets.

In Step S13, the Wi-Fi driver 218 running on the host circuit 201 (e.g., the processor such as the CPU) may deliver the identified pattern (e.g., the common pattern) to the Wi-Fi firmware module 221 (labeled "Driver delivers identified pattern to firmware" in FIG. 4 for brevity).

In Step S14, the Wi-Fi firmware module 221 (e.g., the one or more firmware filters 221F) running on the Wi-Fi circuit 220 (e.g., the microprocessor therein) may configure the identified pattern (e.g., the common pattern) to the Wi-Fi hardware circuit 222 (labeled "Firmware configures pattern to hardware" in FIG. 4 for brevity), where the one or more firmware filters 221F may be implemented as one or more sub-modules among multiple sub-modules of the Wi-Fi firmware module 221, and may be arranged to configure the Wi-Fi hardware circuit 222 (e.g., the one or more hardware filters 222F) to make the Wi-Fi hardware circuit 222 (e.g., the one or more hardware filters 222F) perform the packet blocking according to the identified pattern, but the present invention is not limited thereto. Preferably, the one or more firmware filters 221F may be arranged to perform the packet blocking according to the identified pattern when there is a need.

In Step S15, the Wi-Fi hardware circuit 222 (e.g., the one or more hardware filters 222F) may perform the packet blocking according to the identified pattern, and more particularly, drop subsequent new incoming packets (e.g., new incoming packets that are subsequently received by the Wi-Fi hardware circuit 222) which match the identified pattern (labeled "Hardware drops packets which match pattern" in FIG. 4 for brevity).

For better comprehension, the packet-pattern-aware wake-up prevention control scheme shown in FIG. 3 may be illustrated with the working flow shown in FIG. 4, but the present invention is not limited thereto. Preferably, one or more steps may be added, deleted, or changed in the working flow shown in FIG. 4.

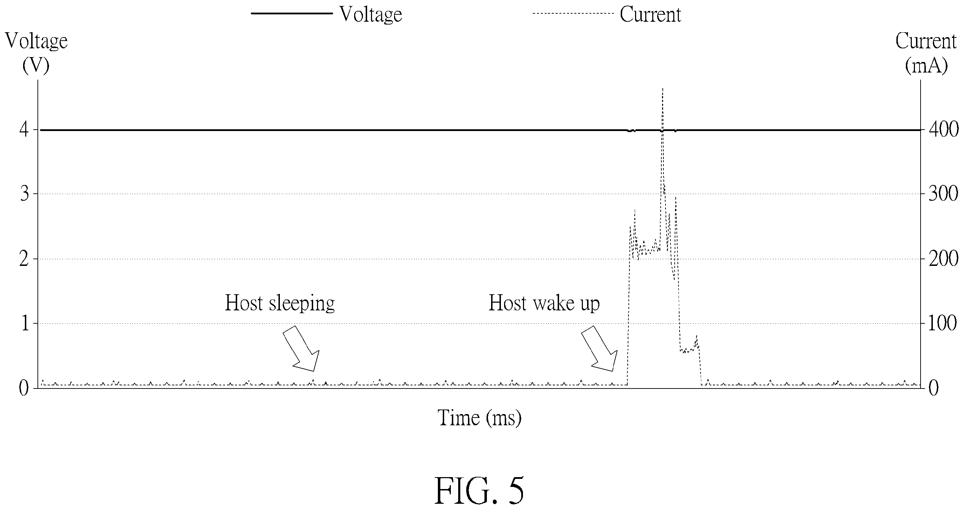

FIG. 5 is a diagram illustrating an example of a wake-up event and associated signal variations. For example, a main circuit (e.g., the host circuit 201 and the Wi-Fi circuit 220) in the architecture shown in FIG. 2 may obtain power from the battery within the electronic device 200, where the voltage output from the battery as indicated by the curve labeled "Voltage" may be measured in unit of volt (V), the current output from the battery as indicated by the curve labeled "Current" may be measured in unit of milliampere (mA), and the time may be measured in unit of millisecond (ms), but the present invention is not limited thereto. Preferably, the curves and/or the signal variations may vary.

When the electronic device 200 (e.g., the host circuit 201) is in the sleeping mode (labeled "Host sleeping" for brevity), the current that is output from the battery may be less than 25 mA, and more particularly, may have a typical value such as 6 mA, which may indicate that the corresponding power consumption of the main circuit is minor. When the electronic device 200 (e.g., the host circuit 201) wakes up and switches from the sleeping mode to a normal operation mode (labeled "Host wake up" for brevity), the current that is output from the battery may increase abruptly and may exceed 450 mA, which may indicate that the corresponding power consumption of the main circuit significantly increases. For better comprehension, the electronic device 200 may operate according to any control scheme among the multiple control schemes mentioned above, where the multiple control schemes may comprise the first power saving control scheme, the second power saving control scheme, etc., but the present invention is not limited thereto. For the electronic device 200 that is capable of operating according to the first power saving control scheme, some abnormal packets (e.g., the unwanted packets that are wirelessly transmitted from the source device mentioned above) may appear regularly in the air to wake up the electronic device 200 (e.g., as illustrated with the wake-up event shown in FIG. 5) multiple times, causing unnecessary power consumption of the electronic device 200. Based on the packet-pattern-aware wake-up prevention control scheme shown in FIG. 3, the electronic device 200 (e.g., the Wi-Fi firmware module 221 running on the Wi-Fi circuit 220) may adaptively configure the bottom layer circuit such as the Wi-Fi hardware circuit 222 to perform the packet blocking on new incoming packets that are similar to or the same as the abnormal packets (e.g., the unwanted packets), in order to fight against this kind of packets to prevent unnecessary power consumption of the electronic device 200 and decrease the probability of operating according to the second power saving control scheme, and therefore enhance the overall performance.

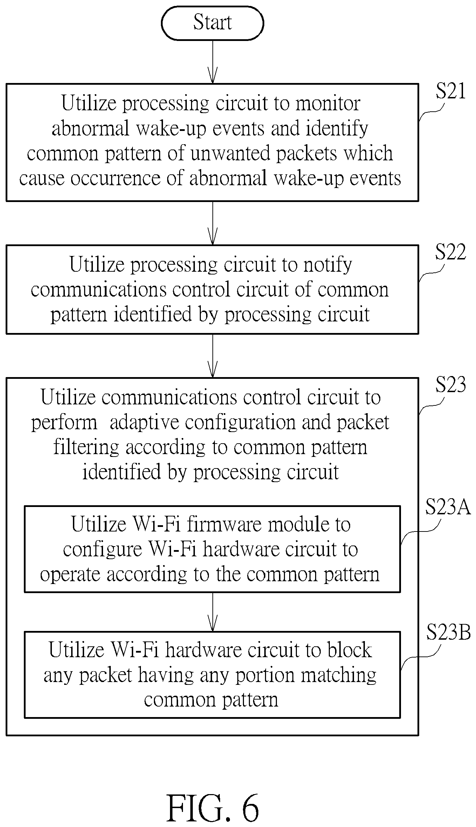

FIG. 6 illustrates a working flow of the method according to an embodiment of the present invention. The first device mentioned above may operate according to the working flow shown in FIG. 6, where the first device may represent the STA device 120 shown in FIG. 1, such as the electronic device 200 shown in FIG. 2.

In Step S21, the first device such as the STA device 120 (e.g., the electronic device 200) may utilize the processing circuit 122 (e.g., the host circuit 201) to monitor abnormal wake-up events among a plurality of wake-up events and identify a common pattern (e.g., the common pattern mentioned above) of a plurality of unwanted packets which cause occurrence of the abnormal wake-up events.

In Step S22, the first device such as the STA device 120 (e.g., the electronic device 200) may utilize the processing circuit 122 (e.g., the host circuit 201) to notify the communications control circuit 124 (e.g., the Wi-Fi circuit 220) of the common pattern identified by the processing circuit 122 (e.g., the host circuit 201).

In Step S23, in response to the common pattern identified by the processing circuit 122 (e.g., the host circuit 201) being sent to the communications control circuit 124 (e.g., the Wi-Fi circuit 220), the first device such as the STA device 120 (e.g., the electronic device 200) may utilize the communications control circuit 124 (e.g., the Wi-Fi circuit 220) to perform adaptive configuration and packet filtering according to the common pattern identified by the processing circuit 122 (e.g., the host circuit 201), for preventing occurrence of an additional abnormal wake-up event due to an additional unwanted packet. For example, the packet filtering may comprise the packet blocking mentioned above, and the additional unwanted packet may represent a new packet having a pattern that matches the common pattern. As shown in FIG. 6, Step S23 may comprise multiple sub-steps such as Step S23Aand Step S23B.

In Step S23A, the first device such as the STA device 120 (e.g., the electronic device 200) may utilize the firmware module 124F (e.g., the Wi-Fi firmware module 221) to configure the hardware circuit 124H (e.g., the Wi-Fi hardware circuit 222) to operate according to the common pattern.

In Step S23B, the first device such as the STA device 120 (e.g., the electronic device 200) may utilize the hardware circuit 124H (e.g., the Wi-Fi hardware circuit 222) to block any packet having any portion matching the common pattern.

For example, in the architecture shown in FIG. 1, the processing circuit 122 may be arranged to notify the firmware module 124F of the common pattern identified by the processing circuit 122. At runtime of the processing circuit 122, the processing circuit 122 (e.g., the program module 122P running thereon) may monitor the abnormal wake-up events and identify the common pattern in Step S21, and notify the communications control circuit 124 (e.g., the firmware module 124F running thereon) of the common pattern in Step S22. In addition, the communications control circuit 124 (e.g., the firmware module 124F running thereon) may perform the adaptive configuration in Step S23A. When the STA device 120 (e.g., the processing circuit 122) is in the sleeping mode, the communications control circuit 124 (e.g., the hardware circuit 124H) may perform the packet filtering according to the common pattern in Step S23B, and more particularly, discard the additional unwanted packet, in order to prevent the processing circuit 122 from being woken up by the additional unwanted packet.

For another example, in the architecture shown in FIG. 2, the host circuit 201 may be arranged to notify the Wi-Fi firmware module 221 of the common pattern identified by the host circuit 201. At runtime of the host circuit 201, the host circuit 201 (e.g., the Wi-Fi driver 218 running thereon) may monitor the abnormal wake-up events and identify the common pattern in Step S21, and notify the Wi-Fi circuit 220 (e.g., the Wi-Fi firmware module 221 running thereon) of the common pattern in Step S22. In addition, the Wi-Fi circuit 220 (e.g., the Wi-Fi firmware module 221 running thereon) may perform the adaptive configuration in Step S23A. When the electronic device 200 (e.g., the host circuit 201) is in the sleeping mode, the Wi-Fi circuit 220 (e.g., the Wi-Fi hardware circuit 222) may perform the packet filtering according to the common pattern in Step S23B, and more particularly, discard the additional unwanted packet, in order to prevent the host circuit 201 from being woken up by the additional unwanted packet.

For better comprehension, the method may be illustrated with the working flow shown in FIG. 6, but the present invention is not limited thereto. Preferably, one or more steps may be added, deleted, or changed in the working flow shown in FIG. 6.

Preferably, the plurality of unwanted packets mentioned in Step S21 may comprise K unwanted packets {P(k) | k = 1, ..., K} such as the unwanted packets P(1), P(2), ... and P(K), where K may represent a positive integer greater than one, and k may represent an integer in the interval [1, K], but the present invention is not limited thereto. For brevity, similar descriptions for these embodiments are not repeated in detail here.

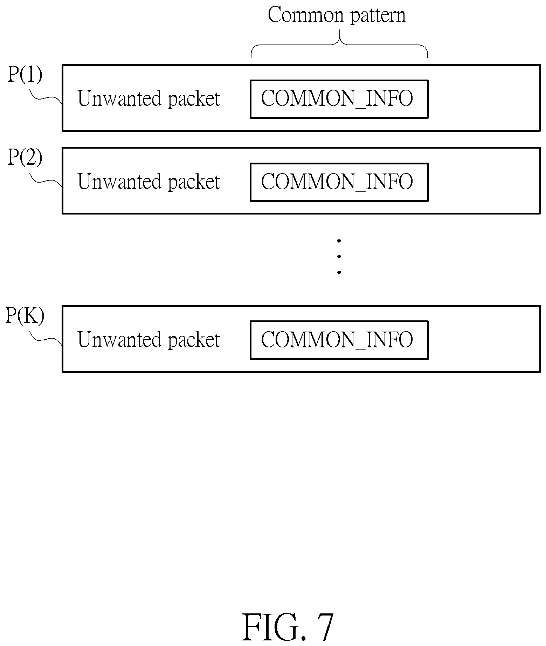

FIG. 7 is a diagram illustrating a pattern extraction control scheme of the method according to an embodiment of the present invention. For example, in Step S21, the processing circuit 122 (e.g., the host circuit 201) may identify the common pattern of the unwanted packets P(1), P(2), ... and P(K) and extract the common pattern from the unwanted packets P(1), P(2), ... and P(K). The common pattern that is identified by the processing circuit 122 (e.g., the host circuit 201) in Step S21 may comprise common information carried by each unwanted packet among the plurality of unwanted packets, such as the common information COMMON_INFO carried by each unwanted packet P(k) among the unwanted packets P(1), P(2), ... and P(K). For brevity, similar descriptions for this embodiment are not repeated in detail here.

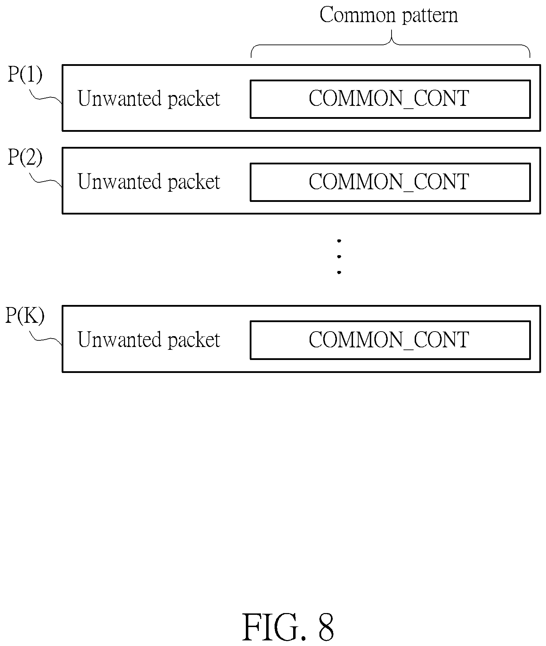

FIG. 8 illustrates some implementation details of the common information COMMON_INFO in the pattern extraction control scheme shown in FIG. 7 according to an embodiment of the present invention. For example, the common information COMMON_INFO may comprise at least one common packet content (e.g., one or more common packet contents), which may be collectively referred to as the common packet content COMMON_CONT, and each unwanted packet P(k) among the unwanted packets P(1), P(2), ... and P(K) may comprise the common packet content COMMON_CONT. For brevity, similar descriptions for this embodiment are not repeated in detail here.

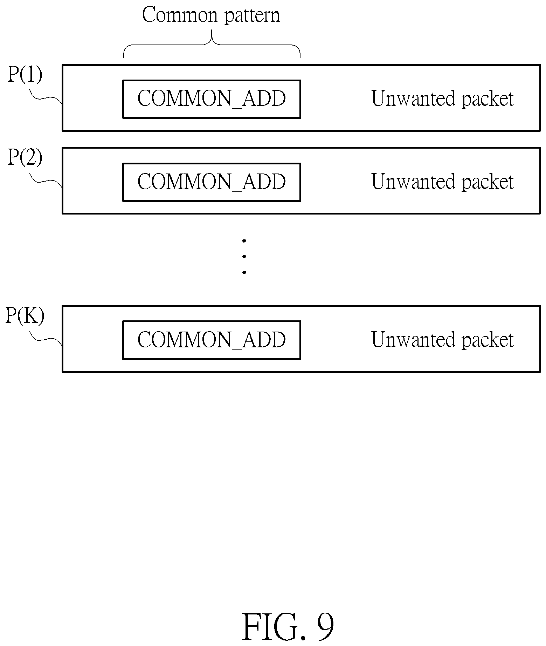

FIG. 9 illustrates some implementation details of the common information COMMON_INFO in the pattern extraction control scheme shown in FIG. 7 according to another embodiment of the present invention. For example, the common information COMMON_INFO may comprise a common address COMMON_ADD, and each unwanted packet P(k) among the unwanted packets P(1), P(2), ... and P(K) may comprise the common address COMMON_ADD. For brevity, similar descriptions for this embodiment are not repeated in detail here.

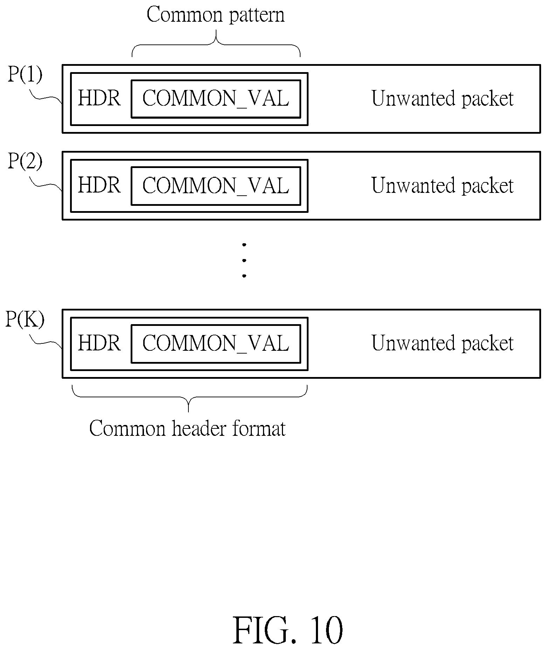

FIG. 10 illustrates some implementation details of the common information COMMON INFO in the pattern extraction control scheme shown in FIG. 7 according to yet another embodiment of the present invention. For example, the respective headers {HDR} of the K unwanted packets {P(k)} (e.g., the unwanted packets P(1), P(2), ... and P(K)) may conform to a predetermined header format corresponding to a predetermined protocol, which may indicate that the K unwanted packets {P(k)} (e.g., the unwanted packets P(1), P(2), ... and P(K)) conform to the predetermined protocol. In addition, the common information COMMON_INFO may comprise at least one common value (e.g., one or more common values) in the predetermined header format corresponding to the predetermined protocol, where the aforementioned at least one common value may be collectively referred to as the common value COMMON_VAL, and the header HDR of each unwanted packet P(k) among the unwanted packets P(1), P(2), ... and P(K) may comprise the common value COMMON_VAL. For example, the common value COMMON_VAL may represent a single common value COMMON_VAL positioned in a certain field of the header HDR of each unwanted packet P(k) among the unwanted packets P(1), P(2), ... and P(K). For another example, the common value COMMON_VAL may represent multiple common values {COMMON_VAL} respectively positioned in multiple fields of the header HDR of each unwanted packet P(k) among the unwanted packets P(1), P(2), ... and P(K). For brevity, similar descriptions for this embodiment are not repeated in detail here.

Preferably, the source of the plurality of unwanted packets, such as the source device that transmits the unwanted packets P(1), P(2), ... and P(K), may represent a device outside the wireless communications system 100 (e.g., a device which is not any device among all devices of the wireless communications system 100), but the present invention is not limited thereto. Preferably, the source of the plurality of unwanted packets, such as the source device that transmits the unwanted packets P(1), P(2), ... and P(K), may represent a device of the wireless communications system 100 (e.g., a certain device among all devices of the wireless communications system 100), where the source device is different from the first device. For example, the source device may represent a third device that is different from any device among the first device (e.g., the STA device 120) and the second device (e.g., the AP device 110). For another example, the source device may represent the second device (e.g., the AP device 110). For brevity, similar descriptions for this embodiment are not repeated in detail here.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing adaptive packet filtering control in a wireless communications system, the wireless communications system comprising a first device, the method being applicable to the first device, the method comprising:
utilizing a processing circuit within the first device to monitor abnormal wake-up events among a plurality of wake-up events and identify a common pattern of a plurality of unwanted packets which cause occurrence of the abnormal wake-up events (S21);
utilizing the processing circuit to notify a communications control circuit of the common pattern identified by the processing circuit (S22), wherein the communications control circuit is positioned within the first device; and
in response to the common pattern identified by the processing circuit being sent to the communications control circuit, utilizing the communications control circuit to perform adaptive configuration and packet filtering according to the common pattern identified by the processing circuit (S23), for preventing occurrence of an additional abnormal wake-up event due to an additional unwanted packet.

2. A first device (120), for performing adaptive packet filtering control in a wireless communications system, the wireless communications system comprising the first device (120) and a second device (110), the first device (120) comprising:
a processing circuit (122), arranged to control operations of the first device (120); and
a communications control circuit (124), coupled to the processing circuit (122), arranged to perform communications control, wherein the at least one communications control circuit (124) is arranged to perform wireless communications operations with the second device (110) for the first device (120);
wherein:
the first device (120) is arranged to utilize the processing circuit (122) to monitor abnormal wake-up events among a plurality of wake-up events and identify a common pattern of a plurality of unwanted packets which cause occurrence of the abnormal wake-up events;
the first device (120) is arranged to utilize the processing circuit (122) to notify the communications control circuit (124) of the common pattern identified by the processing circuit (122); and
in response to the common pattern identified by the processing circuit (122) being sent to the communications control circuit (124), the first device (120) is arranged to utilize the communications control circuit (124) to perform adaptive configuration and packet filtering according to the common pattern identified by the processing circuit (122), for preventing occurrence of an additional abnormal wake-up event due to an additional unwanted packet.

3. The method of claim 1 or the first device of claim 2, wherein a firmware module (124F) running on the communications control circuit (124) is arranged to control at least one hardware circuit (124H) within the communications control circuit (124); and the processing circuit (122) is arranged to notify the firmware module (124F) of the common pattern identified by the processing circuit (122).

4. The method of claim 3, wherein utilizing the communications control circuit to perform the adaptive configuration and the packet filtering according to the common pattern identified by the processing circuit further comprises:
utilizing the firmware module to configure the at least one hardware circuit to operate according to the common pattern, and
utilizing the at least one hardware circuit to block any packet having any portion matching the common pattern; or
the first device of claim 3, wherein regarding utilizing the communications control circuit (124) to perform the adaptive configuration and the packet filtering according to the common pattern identified by the processing circuit (122), the firmware module (124F) is arranged to configure the at least one hardware circuit (124H) to operate according to the common pattern, and the at least one hardware circuit (124H) is arranged to block any packet having any portion matching the common pattern.

5. The method or the first device of claim 3 or 4, wherein the firmware module (124F) is implemented by way of a program module running on a microprocessor within the communications control circuit (124).

6. The method of any one of claims 1 and 3 to 5, or the first device of any one of claims 2 to 5, wherein the processing circuit (122) is arranged to monitor the abnormal wake-up events and identify the common pattern at runtime of the processing circuit (122).

7. The method of any one of claims 1 and 3 to 6, wherein utilizing the communications control circuit to perform the adaptive configuration and the packet filtering according to the common pattern identified by the processing circuit further comprises:
discarding the additional unwanted packet, in order to prevent the processing circuit from being woken up by the additional unwanted packet, wherein the additional unwanted packet represents a new packet having a pattern that matches the common pattern; or
the first device of any one of claims 2 to 6, wherein regarding utilizing the communications control circuit (124) to perform the adaptive configuration and the packet filtering according to the common pattern identified by the processing circuit (122), the communications control circuit (124) is arranged to discard the additional unwanted packet, in order to prevent the processing circuit (122) from being woken up by the additional unwanted packet, wherein the additional unwanted packet represents a new packet having a pattern that matches the common pattern.

8. The method of any one of claims 1 and 3 to 7, or the first device of any one of claims 2 to 7, wherein the common pattern comprises common information carried by each unwanted packet among the plurality of unwanted packets.

9. The method or the first device of claim 8, wherein the common information comprises at least one common packet content.

10. The method or the first device of claim 8 or 9, wherein the common information comprises a common address.

11. The method or the first device of any one of claims 8 to 10, wherein the common information comprises at least one common value in a predetermined header format corresponding to a predetermined protocol.
